# EUROPÄISCHE PATENTSCHRIFT

(11) **EP 2 148 773 B1**
(45) Veröffentlichungstag und Bekanntmachung des Hinweises auf die Patenterteilung: **25.07.2012**
(21) Anmeldenummer: 08735199.5
(22) Anmeldetag: 12.04.2008
(51) Int. Cl.: B29C 47/12, B29C 47/16, B29C 47/92, B29C 49/00, B29C 49/04, B29C 49/20, B29C 51/02, B29C 51/26, B29C 69/00

(54) **VORRICHTUNG UND VERFAHREN ZUR HERSTELLUNG VON KUNSTSTOFFGEGENSTÄNDEN DURCH EXTRUSIONSBLASFORMEN**
DEVICE AND METHOD FOR MANUFACTURING OF PLASTIC ARTICLES BY EXTRUSION BLOW MOULDING
DISPOSITIF ET PROCEDE POUR LA FABRICATION D'ARTICLES EN PLASTIQUE PAR EXTRUSION-SOUFFLAGE

(30) Priorität: 30.05.2007 DE 102007025296
(43) Veröffentlichungstag der Anmeldung: 03.02.2010
(73) Patentinhaber: Kautex Textron GmbH & Co. KG., 53229 Bonn (DE)
(72) Erfinder: ECKHARDT, Joachim, 53229 Bonn (DE); FRANKE-MAINTZ, Matthias, 53773 Hennef (DE); FROITZHEIM, Thomas, 53757 St. Augustin (DE); WOLTER, Gerd, 53639 Königswinter (DE)
(74) Vertreter: Polypatent
(86) Internationale Anmeldenummer: PCT/EP2008/002914
(87) Internationale Veröffentlichungsnummer: WO 2008/145226

(56) Entgegenhaltungen:
- WO-A-2007/140880
- DE-A1- 2 305 877
- DE-U1- 8 903 607
- DE-U1- 9 004 113
- DE-U1-202006 013 751
- DE-U1-202007 008 132
- US-A- 3 003 245
- US-A- 3 195 183
- US-A- 4 470 790
- US-A- 5 770 129

## Beschreibung

Die Erfindung betrifft eine Vorrichtung zur Extrusion von bahn- oder bänderförmigen Vorformlingen aus thermoplastischem Kunststoff mit einem Extrusionskopf, dessen Schmelzeaustritt als quer zur Extrusionsrichtung verstellbarer, sich geradlinig erstreckender Düsenspalt ausgebildet ist.

Die Erfindung betrifft weiterhin ein Verfahren zur Extrusion eines bahn- oder bänderförmigen Vorformlings aus thermoplastischem Kunststoff, vorzugsweise unter Verwendung der Vorrichtung.

Eine Vorrichtung der eingangs genannten Art ist beispielsweise aus dem Gebrauchsmuster DE 20 2006 013 751 bekannt. Das Gebrauchsmuster DE 20 2006 013 751 U1 beschreibt ein Formwerkzeug zur Herstellung von bandförmigen Vorformlingen, umfassend mehrere Kanäle, die jeweils eine ringabschnittsförmige Eintrittsöffnung und eine längliche Austrittsöffnung haben, wobei die ringabschnittsförmigen Eintrittsöffnungen auf einem gemeinsamen Radius über den Umfang verteilt angeordnet und durch radial verlaufende Schneiden voneinander getrennt sind.

Um den mittels eines solchen Formwerkzeugen hergestellten bahnförmigen Kunststoffformlingen ein Wanddickenprofil aufgeben zu können, wird in der DE 20 2006 013 751 eine Wanddickenregelvorrichtung vorgeschlagen, mit welcher die Wanddicke des Vorformlings über dessen gesamte Breite verändert werden kann. Darüber hinaus lässt sich dem bandförmigen Vorformling mittels der dort vorgeschlagenen Wanddickenregelvorrichtung ein wellenförmiges Profil über die gesamte Länge oder an definierten Stellen über die Breite aufgeben. Hierzu wird vorgeschlagen, den Düsenspalt der zur Extrusion verwendeten Breitschlitzdüse einerseits mit einem Stellkörper zu verstellen, der über die gesamte Breite der Düse wirkt und diese Verstellung andererseits mittels eines Stellelements in Form eines Stellbalkens aus elastischem Federstahl zu überlagern. Auf den Stellbalken können mehrere Stellantriebe so einwirken, dass sich die Breite des Austrittsspalts der Breitschlitzdüse partiell über die Länge des Vorformung verändern lässt, so dass je nach Bedarf ein Abschnitt einer größeren Wanddicke und in einem hierzu benachbarten Abschnitt des Vorformlings eine kleinere Wanddicke erzeugt werden können. Dies ermöglicht eine gute Anpassung der Kontur des Vorformlings an die Erfordernisse des aus diesem herzustellendem Halbzeugs oder Endprodukts.

Der Variabilität der Wanädickenstreuung über die Breite des Vorformlings sind allerdings mit der bekannten Vorrichtung Grenzen gesetzt, beispielsweise lässt sich die absolute Breite des Vorformlings nicht beeinflussen. Auch der Erzeugung einzelner scharfer Vorsprünge über die Breite und Länge des bahnförmigen Vorformlings sind Grenzen gesetzt, da wegen der mangelnden Flexibilität des Stellbalkens nur eine begrenzte Dickenvariation des Vorformlings möglich ist.

Aus der DE 89 03 307 U1 ist eine Extruder-Kalander-Kombination mit einem an dem Extruder vor dem Kalander angebrachten Spritzkopf für die Formung eines mit zylindrischem Querschnitt einlaufenden Extrudats zu flachen, breiten Streifen mit einer am Austritt angebrachten Ausformleiste bekannt. Um eine verstärkte Wulstbildung durch sich vor dem Walzenspalt der Kalanderanordnung aufbauendes Material zu verhindern, wird in der DE 89 03 307 U1 vorgeschlagen, den an dem Extruder vor dem Kalander angebrachten Spritzkopf mit einer segmentierten Ausformleiste auszustatten, wobei die Segmente quer zum Austrittsspalt beweglich sind, sodass sich über die Breite des Extrudats die Stärke des austretenden Streifens individuell an beliebigen Stellen derart einstellen lässt, dass die Bildung eines Rollenknets vor dem Auszugsspalt der Kalanderwalzenanordnung verhindert wird.

Aus der US 3,003.245 A Ist eine vergleichbare einstellbare Formvorrichtung zum Extrudieren eines mit Profil versehenen Streifens aus elastomerem, gummiartigen Material für die Reifenherstellung bekannt. Eine solche Formvonichtung mit einem mit einer Öffnung versehenen Formkopf wird üblicherweise am auslaufseitigen Ende des Extruders befestigt. Solche Formköpfe werden üblicherweise beim Extrusionsbiasformen nicht verwendet.

Der Erfindung liegt die Aufgabe zugrunde, eine Vorrichtung nach Oberbegriff von Anspruch 1 sowie ein geeignetes Verfahren bereitzustellen, welches eine gute Anpassung der Kontur des Vorformlings an die Erfordernisse des herzustellenden Kunststoffartikels ermöglicht.

Die Aufgabe wird gelöst durch die Merkmale einer Vorrichtung gemäß Anspruch 1.

Überraschenderweise hat sich gezeigt, dass eine stufenförmige Ausbildung der Innenkontur des Düsenspalts keinerlei negativen Einfluss auf das Fließverhalten der Schmelze hat. Dadurch, dass die Segmente jeweils unabhängig voneinander verstellbar sind, lassen sich auch verhältnismäßig starke Wanddickenvariationen des Vorformlings erreichen, bis hin zu Materialanhäufungen, die bereits als Wanddickensprung bezeichnet werden können. Auf diese Art und Weise lässt sich ein optimale Materialverteilung über die Lange und Breite des Vorformlings erreichen, was bei der Herstellung von größeren Bauteilen mit einer beachtlichen Materialersparnis einhergeht.

Da die herzustellenden Vorformlinge innerhalb eines Blasformwerkzeugs unter Aufbringung von innerem Überdruck oder von Vakuum zu einem fertigen Erzeugnis ausgeformt und umgeformt werden sollen, ist eine günstige Verteilung von Materialanhäufungen, Dickstellen und Dünnstellen über Länge und Breite des Vorformlings wünschenswert, insbesondere auch, um dem unterschiedlichen Reck- und Dehnverhalten des im Werkzeug aufzuweitenden Bauteils gerecht zu werden.

Ein besonderer Vorteil der erfindungsgemäßen Vorrichtung kann darin gesehen werden, dass nicht nur partiell die Weite des Düsenspalts beeinflussbar ist, sondern der Düsenspalt vielmehr auch in seiner Breite einstellbar ist.

Hierzu ist es besonders zweckmäßig, dass die Segmente jeweils als Schieber ausgebildet sind, die über einzelne Aktuatoren quer zur Schmelzflussrichtung verstellbar sind.

Die Segmente können beispielsweise dynamisch während der Extrusion verstellbar sein, und zwar nach einem vorgebebenen Wanddickenprogramm. Dieses kann beispielsweise über eine Steuereinrichtung die fortlaufende Verstellung der Aktuatoren bewirken, so dass dem Vorformling das gewünschte Profil aufgegeben wird.

Besonders zweckmäßig ist es, wenn keine Grundverstellung der Spaltweite des Düsenspalts mittels eines separaten Bauteils vorgesehen ist, das über die gesamte Breite des Düsenspalts wirkt.

Vorteilhaft ist es, wenn die Segmente unterschiedlich breit sind, so dass diese einen unterschiedlichen Anteil der Begrenzung des Düsenspalts ausmachen, insbesondere, wenn die äußeren Segmente schmaler sind als die dazwischen liegenden Segmente, lässt sich besonders günstig eine stufenweise Verringerung der Breite des Düsenspalts erzielen, so dass beispielsweise auch eingeschnürte oder eingezogene bzw. taillierte bahnförmige Vorformlinge herstellbar sind.

Bei der bevorzugten Variante ist vorgesehen, dass die Segmente jeweils zwischen einer vollständig geöffneten Neutralstellung, in der der Düsenspalt in dem betreffenden Bereich die maximale Weite hat, und einer den Düsenspalt in diesem Bereich vollständig verschließenden Stellung verstellbar sind.

Bei einer bevorzugten Variante der Vorrichtung gemäß der Erfindung ist vorgesehen, dass der Düsenspalt beiderseits, d.h. auf beiden Längsseiten, quer zur Extrusionsrichtung von verstellbaren Segmenten begrenzt wird. Hierdurch lässt sich eine noch größere Dickenvariation über Breite und Länge des Vorformlings erreichen.

Der Düsenspalt ist vorzugsweise in der Neutralstellung der Segmente als im Querschnitt rechteckiger Schlitz ausgebildet, dessen Länge deutlich größer als dessen Weite ist. Die Länge oder Breite des Schlitzes entspricht der Breite des Vorformlings, wohingegen die Weite des Schlitzes die Dicke des Vorformlings definiert.

Die der Erfindung zugrundeliegende Aufgabe wird weiterhin gelöst durch ein Verfahren gemäß Anspruch 9.

Es ist vorgesehen, dass die Länge des Düsenspalts dynamisch während der Extrusion variiert wird. Hierdurch ist es möglich, beispielsweise taillierte Vorformlinge zu erhalten. Bei der Herstellung blasgeformter Artikel in einem mehrteiligen Werkzeug , die beispielsweise aus zueinander komplementären Schalen zusammengesetzt sind, wird durch diese Maßnahme eine beachtliche Materialeinsparung erzielt. Die Größe des abgequetschten Überstandes (Butzen/Flash) kann so verringert werden.

Bei dem Verfahren gemäß der Erfindung ist vorgesehen, dass das plastifizierte Material aus dem Extruder in dem Extrusionskopf zunächst in die Form eines schlauchförmig geführten Schmelzstroms gebracht wird, der innerhalb des Extrusionskopfs in wenigstens einen, vorzugsweise in zwei bahnförmig geführte Schmelzeströme umgelenkt wird. Der Extrusionskopf kann hierzu in bekannter Art und Weise als Axialanguss- oder Radialangusskopf ausgebildet sein, wobei der aus dem Extruder austretende Schmelzestrom die Pinole bzw. den Dorn axial oder radial umfließt. Der Schmelzestrom kann dann innerhalb des Extrusionskopfs durch entsprechend ausgebildete Fließkanäle umgelenkt werden. Hierbei kann vorgesehen sein, dass mehrere kreisringförmig auf einem Radius angeordnete Schmelzeströme (mehrschichtige Vorformlinge) seitlich mittels Trennvorrichtungen aufgeschnitten bzw. aufgeteilt werden und über mehrere, als längliche, sich geradlinig erstreckende Düsenspalte als lappen- oder bahnförmige Vorformlinge austreten.

Das aus dem Düsenspalt austretende Extrudat wird innerhalb eines mehrteiligen Formwerkzeugs in der ersten Hitze unter Verwendung von Gasdruck und/oder Vakuum zu einem Kunststoffartikel weiterverarbeitet.

Die Erfindung wird nachstehend anhand eines in den Zeichnungen dargestellten Ausführungsbeispiels erläutert.

Es zeigen:
- Figur 1: eine schematische Ansicht einer Extrusionsvorrichtung gemäß der Erfindung sowie eines unterhalb der Extrusionsvorrichtung angeordneten, mehrteiligen Formwerkzeugs,
- Figur 2: ein Schnitt entlang der Linien II-II in Figur 1,
- Figur 3: ein Schnitt entlang der Linien III-III in Figur 2, wobei die Figur 3 ein erstes Ausführungsbeispiel der Vorrichtung gemäß der Erfindung veranschaulicht,
- Figur 4: eine der Figur 3 entsprechende Ansicht bei betätigten Stelleinrichtungen während der Extrusion,
- Figur 5: eine den Figuren 3 und 4 etwa entsprechende Ansicht nach einem zweiten Ausführungsbeispiel gemäß der Erfindung,
- Figur 6: eine stark übertriebene Darstellung eines aus der erfindungsgemäßen Vorrichtung austretenden Vorformlings,
- Figuren 7a bis 7c:: mögliche Querschnittsprofile eines Vorformlings, der mit der Vorrichtung nach dem ersten Ausführungsbeispiel der Erfindung erhalten wurde und
- Figur 8: ein mögliches Querschnittsprofil eines Vorformlings, der mit der Vorrichtung nach dem zweiten Ausführungsbeispiel der Erfindung erhalten wurde.

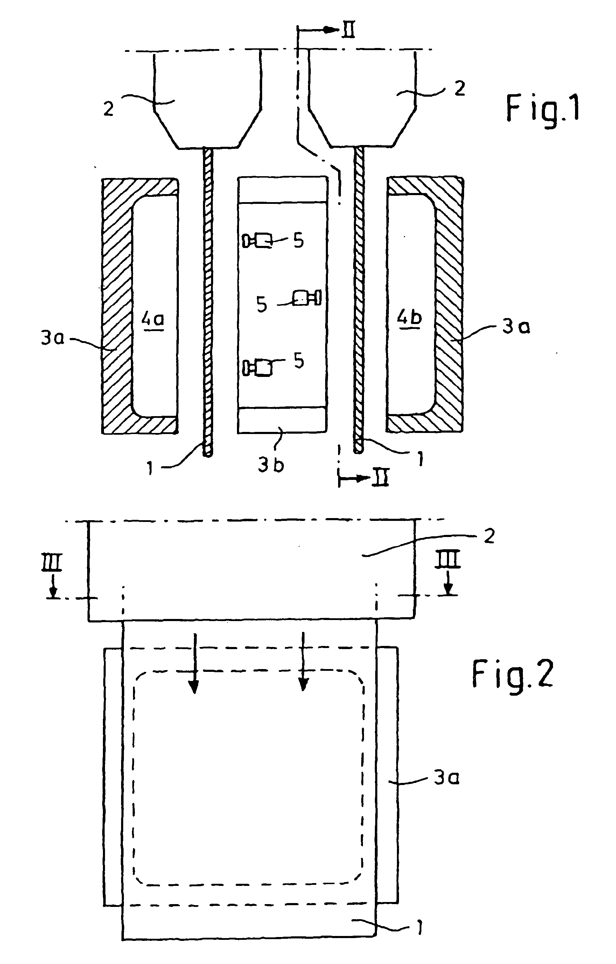

In Figur 1 ist schematisch ein Teil des Herstellungsverfahrens eines extrusionsblasgeformten Artikels aus bahnförmigen Vorformlingen 1 dargestellt. Die Vorformlinge 1 werden aus zwei Breitschlitzdüsen 2 hängend extrudiert. Die Breitschlitzdüsen 2 sind Teil eines nicht dargestellten Extrusionskopfs, der in bekannter Art und Weise aus einem Extruder mit schmelzflüssigem thermoplastischem Kunststoff beschickt wird.

Die Vorformlinge 1 in Form von Bahnen oder Lappen können, wie dies beispielsweise in Figur 1 dargestellt ist, zwischen die geöffneten Teile eines Formwerkzeugs 3 extrudiert werden.

Das Formwerkzeug 3 besteht aus zwei Außenformen 3a und einer Mittelform 3b. Die Außenformen 3a bilden jeweils Teilkavitäten, in die die Vorformlinge 1 hineingezogen oder hineingedrückt werden und die jeweils die spätere Außenkontur des fertigen Artikels bestimmen. Die Herstellung des Artikels kann beispielsweise derart erfolgen, dass zunächst die Vorformlinge 1 jeweils zwischen die geöffneten Außenformen 3a und die Mittelform 3b extrudiert werden. Sodann werden die Außenformen 3a gegen die Mittelformen 3b geschlossen, die Vorformlinge 1 werden entweder unter Aufbringung von Gasdruck und/oder Vakuum in den Teilkavitäten 4a, 4b ausgeformt. Die Mittelform 3b umfasst ein- und ausstellbare Bauteilhalter 5, über die während oder nach der Ausformung der Vorformlinge 1 in den Teilkavitäten 4a, 4b Einbauteile in den als Hohlkörper herzustellenden Artikel eingebracht werden. Sodann wird die Mittelform 3b zwischen den Außenformen 3a quer zur Extrusionsrichtung, entweder in die Zeichnungsebene hinein oder aus dieser heraus, verfahren. Die Außenformen 3a, 3b werden im Sinne einer Schließbewegung aufeinander zugefahren, so dass die in diesen enthaltenen schalenförmigen Halbzeuge zu einem Behälter mit einer umlaufenden Naht verschweißt werden.

Die Vorformlinge 1 können jeweils als mehrschichtiges Coextrudat vorgesehen sein.

Die Teilkavitäten 4a, 4b bzw. die Geometrie der Außenformen 3a ist in den dargestellten Ausführungsbeispielen stark vereinfacht. Beide Teilkavitäten 4a, 4b können, je nach herzustellendem Artikel, eine stark zerklüftete Kontur aufweisen. Darüber hinaus müssen die Außenformen 3a nicht notwendigerweise einen etwa rechteckigen Querschnitt aufweisen, wie das in Figur 2 dargestellt ist. Folglich ist es wünschenswert, die Breite der Vorformlinge über ihre Länge variieren zu können.

Darüber hinaus ist es ebenfalls wünschenswert, den Vorformlingen 1 ein Wanddickenprofil aufzugeben, da je nach Topographie der Teilkavitäten 4a, 4b das in diesen aufgeweitete Material eine mehr oder weniger starke Dehnung, Streckung oder Reckung erfährt. Einerseits sollen übermäßige Materialanhäufungen in der Wandung des fertigen Artikels vermieden werden, andererseits kann es aber auch wünschenswert sein, an bestimmten Stellen Materialanhäufungen vorzusehen.

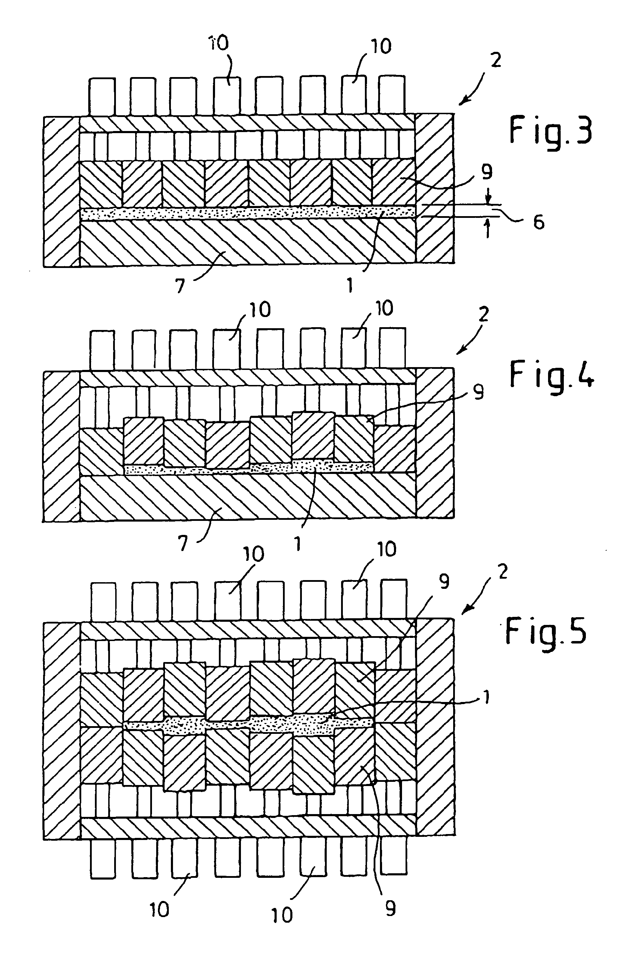

Hierzu ist erfindungsgemäß vorgesehen, dass der Düsenspalt 6 der Breitschlitzdüsen 2 sowohl in seiner Weite als auch in seiner Länge verstellbar ist. Wie insbesondere den Schnittansichten in Figuren 3 bis 5 zu entnehmen ist, ist der Düsenspalt 6 als im Querschnitt rechteckförmiger Schlitz ausgebildet, dessen Länge ein Vielfaches seiner Weite beträgt.

Bei dem Figuren 3 und 4 dargestellten Ausführungsbeispiel wird der Düsenspalt 6 einerseits von einem starren Wandabschnitt 7 des Düsenkörpers 8 und andererseits von mehreren Segmenten in Form von Schiebern 9 begrenzt.

Der Wandabschnitt 7 und die Schieber 9 begrenzen jeweils die Längsseiten des Düsenspalts 6. Die Schieber 9 sind jeweils über Stelleinrichtungen 10 quer zur Extrusionsrichtung verstellbar, und zwar unabhängig voneinander, so dass dem betreffenden Vorformling 1 ein etwa treppenförmiges oder stufenförmiges Profil aufgegeben werden kann.

Obwohl der Querschnitt des Düsenspalts somit stufig ist, hat sich überraschenderweise herausgestellt, dass das plastifizierte Material ein solches Fließverhalten hat, dass diese Stufen oder diskontinuierliche Wanddickenveränderungen an dem Vorformling als scharfe Übergänge nicht wiederzufinden sind.

Wie vorstehend bereits erwähnt, wird die Stellung der Schieber 9 über die Stelleinrichtungen während der Extrusion, d.h. dynamisch, beeinflusst, so dass den Vorformlingen 1 ein sich über die Länge der Vorformlinge veränderndes Profil (Dickenänderung über die Breite) aufgegeben werden kann.

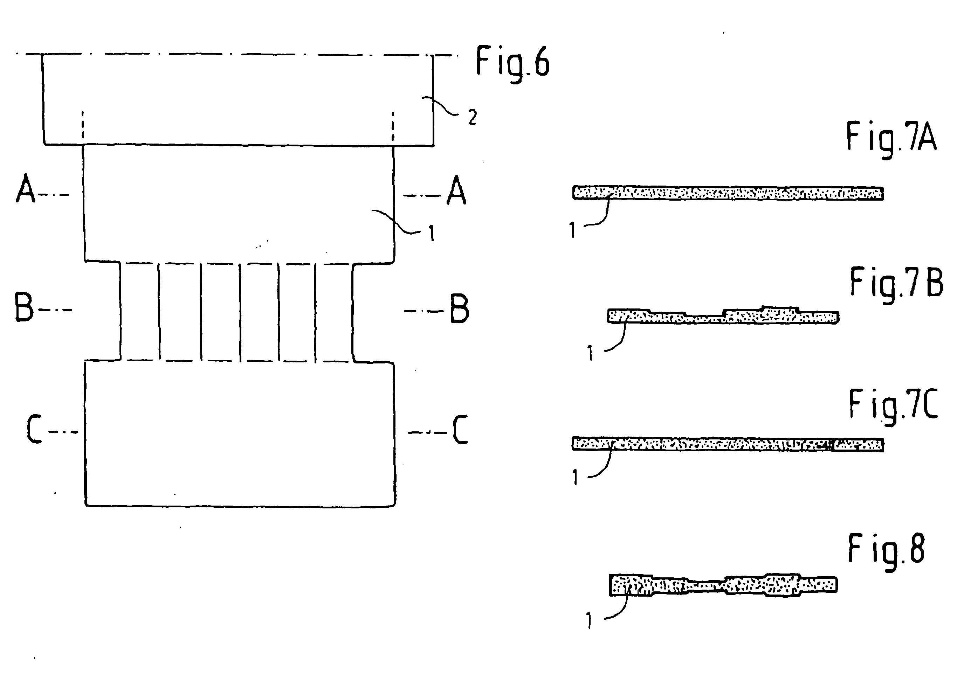

Die Schieber 9 sind beispielsweise in Figur 3 in der vollständig geöffneten Neutralstellung dargestellt, wohingegen beispielsweise in Figur 4 die äußeren Schmalseiten des Düsenspalts 6 definierenden Schieber 9 sich in ihrer vollständig geschlossenen Endlage befinden. Auf diese Art und Weise lässt sich die Länge des Düsenspalts 6 ebenso beeinflussen, so dass sich, wie dies beispielsweise in Figur 6 übertrieben dargestellt ist, Vorformlinge 1 erzeugen lassen, die tailliert sind, bzw. eingezogene Abschnitte (B) aufweisen.

Der in Figur 6 gezeigte Vorformling 1 besitzt der Länge nach drei aufeinanderfolgende Abschnitte A, B, C, wohingegen der Abschnitt B bezüglich der Abschnitte A, C eine geringere Breite aufweist bzw. eingezogen ist.

An dieser Stelle sei nochmals erwähnt, dass die Breitschlitzdüsen 2 gemäß der Erfindung keine überlagerte oder separate Grundspaltverstellung aufweisen, die über die Gesamtbreite des Düsenspalts 6 wirkt. Die Schieber 9 sind alle unabhängig voneinander betätigbar.

In Figur 5 ist schließlich eine Variante der Breitschlitzdüse 2 gemäß der Erfindung dargestellt, bei der Schieber 9 beide Längsseiten des Düsenspalts 6 unmittelbar begrenzen, so dass dem Vorformling 1 ein Wanddickenprofil derart aufgebbar ist, dass dieser zwei profilierte Außenseiten aufweist, wie dies beispielsweise in der Schnittansicht in Figur 8 dargestellt ist. Auf diese Art und Weise lässt sich besonders vorteilhaft ein Vorformling erstellen, der auf beiden seiner großen Außenflächen mit einer über Länge und Breite variierenden komplexen Topographie herstellbar ist. Darüber hinaus ist, wie dies in Figur 5 dargestellt ist, auch die Länge des Düsenspalts 6 einstellbar, und zwar können die Schieber 9 abschnittsweise von außen nach innen gegeneinander gefahren werden, so dass auch in der Vorrichtung gemäß Figur 5 ein Vorformling herstellbar ist, wie er in Figur 6 dargestellt ist.

### Bezugszeichenliste:

- 1: Vorformlinge
- 2: Breitschlitzdüsen
- 3: Formwerkzeug
- 3a: Außenformen
- 3b: Mittelformen
- 4a, 4b: Teilkavitäten
- 5: Bauteilhalter
- 6: Düsenspalt
- 7: Wandabschnitt
- 8: Düsenkörper
- 9: Schieber
- 10: Stelleinrichtungen

## Patentansprüche

1. Vorrichtung zur Herstellung von Kunststoffartikeln durch Extrusionsblasformen, umfassend einen Extrusionskopf zur Extrusion von bahn- oder bänderförmigen Vorformlingen (1) aus thermoplastischem Kunststoff sowie ein mehrteiliges Formwerkzeug (3) zur Weiterverarbeitung der bahn- oder bänderförmigen Vorformlinge in der ersten Hitze unter Anwendung von Gasdruck und/oder Vakuum zu dem Kunststoffartikel wobei der Schmelzeaustritt des Extrusionskopfs als quer zur Extrusionsrichtung verstellbarer, sich geradlinig erstreckender Düsenspalt ausgebildet ist, **dadurch gekennzeichnet, dass** der Düsenspalt (6) wenigstens einseitig unmittelbar von einer Anzahl von unabhängig voneinander quer zur Extrusionsrichtung verstellbaren Segmenten (9) begrenzt wird, die eine stufen- oder treppenförmig Verstellung der Weite und/oder Breite des Düsenspalts (6) ermöglichen.

2. Vorrichtung nach Anspruch 1, **dadurch gekennzeichnet, dass** die Segmente jeweils als Schieber (9) ausgebildet sind, die über einzelne Stelleinrichtungen (10) quer zur Schmelzflussrichtung verstellbar sind.

3. Vorrichtung nach einem der Ansprüche 1 oder 2, **dadurch gekennzeichnet, dass** die Segmente (9) dynamisch während der Extrusion verstellbar sind.

4. Vorrichtung nach einem der Ansprüche 1 bis 3, **dadurch gekennzeichnet, dass** keine Grundverstellung der Spaltweite des Düsenspalts (6) mittels eines Bauteils vorgesehen ist, das über die gesamte Breite des Düsenspalts (6) wirkt.

5. Vorrichtung nach einem der Ansprüche 1 bis 4, **dadurch gekennzeichnet, dass** die Segmente unterschiedlich breit sind, so dass diese einen unterschiedlichen Anteil der Begrenzung des Düsenspalts (6) ausmachen.

6. Vorrichtung nach Anspruch 5, **dadurch gekennzeichnet, dass** die äußeren Segmente schmaler sind als die dazwischenliegend angeordneten Segmente.

7. Vorrichtung nach einem der Ansprüche 1 bis 5, **dadurch gekennzeichnet, dass** die Segmente jeweils zwischen einer vollständig geöffneten Neutralstellung, in der der Düsenspalt (6) in dem betreffenden Bereich die maximale Weite hat, und einer den Düsenspalt (6) in diesem Bereich vollständig verschließenden Stellung verstellbar sind.

8. Vorrichtung nach einem der Ansprüche 1 bis 7, **dadurch gekennzeichnet, dass** der Düsenspalt (6) auf beiden Längsseiten von quer zur Extrusionsrichtung verstellbaren Segmenten begrenzt wird.

9. Verfahren zum Extrusionsblasformen von Kunststoffartikeln unter Verwendung wenigstens eines bänder- oder bahnförmigen Vorformlings aus thermoplastischem Kunststoff, folgende Verfahrensschritte umfassend:
- Plastifizieren von thermoplastischem Kunststoff in einem Extruder,
- Zuführen des plastifizierten Kunststoffs an einen Düsenspalt eines Extrusionskopfs, wobei der Düsenspalt einen länglichen, etwa rechteckigen Querschnitt aufweist,
- abschnittsweise Verstellung der Spaltweite des Düsenspalts mittels verstellbarer, den Düsenspalt unmittelbar begrenzender Segmente.
- wobei die Verstellung dynamisch während der Extrusion erfolgt und dem Vorformling über die Länge und/oder Breite dabei ein Wanddickenprofil aufgegeben wird,
- die Weiterverarbeitung des aus dem Düsenspalt austretenden Extrudats zu dem Kunststoffartikel innerhalb eines mehrteiligen Formwerkzeugs in der ersten Hitze unter Anwendung von Gasdruck und/oder Vakuum erfolgt.

10. Verfahren nach Anspruch 9, **dadurch gekennzeichnet, dass** die Länge des Düsenspalts dynamisch während der Extrusion variiert wird.

11. Verfahren nach einem der Ansprüche 9 oder 10, **dadurch gekennzeichnet, dass** das plastifizierte Material aus dem Extruder in dem Extrusionskopf zunächst in die Form eines schlauchförmig geführten Schmelzestroms gebracht wird, der innerhalb des Extrusionskopfs in wenigstens einen, vorzugsweise in zwei bahnförmig geführte Schmelzeströme umgelenkt wird.

## Claims

1. Device for manufacturing plastic articles by extrusion blow-moulding, said device comprising an extrusion head for extruding preforms (1) in web or strip form made of thermoplastic plastic, and also a multi-part moulding tool (3) for the further processing of the preforms in web or strip form in the first heat using gas pressure and/or vacuum to form the plastic article, wherein the melt outlet of the extrusion head is constructed as a nozzle gap which is adjustable, transversely to the direction of extrusion, and extends in a rectilinear manner, **characterised in that** the nozzle gap (6) is directly bounded, at least on one side, by a number of segments (9) which are adjustable, independently of one another, transversely to the direction of extrusion and which permit step-shaped or stair-shaped adjustment of the width and/or breadth of the nozzle gap (6).

2. Device according to claims 1, **characterised in that** the segments are each constructed as slides (9) which are adjustable, transversely to the direction of flow of the melt, via individual setting apparatuses (10).

3. Device according to either of claims 1 or 2, **characterised in that** the segments (9) are adjustable dynamically during the extrusion.

4. Device according to one of claims 1 to 3, **characterised in that** no provision is made for basic adjustment of the gap width of the nozzle gap (6) by means of a component which operates over the entire breadth of said nozzle gap (6).

5. Device according to one of claims 1 to 4, **characterised in that** the segments are of different breadth, so that they constitute different portions of the boundary of the nozzle gap (6).

6. Device according to claim 5, **characterised in that** the outer segments are narrower than the segments arranged between them.

7. Device according to one of claims 1 to 5, **characterised in that** the segments are each adjustable between a completely open neutral position, in which the nozzle gap (6) has the maximum width in the relevant region, and a position which completely closes the nozzle gap (6) in the said region.

8. Device according to one of claims 1 to 7, **characterised in that** the nozzle gap (6) is bounded, on both longitudinal sides, by segments which are adjustable transversely to the direction of extrusion.

9. Method for the extrusion blow-moulding of plastic articles using at least one preform in strip or web form made of thermoplastic plastic, said method comprising the following steps:
- the plasticizing of thermoplastic plastic in an extruder;
- the feeding of the plasticized plastic to a nozzle gap of an extrusion head, said nozzle gap having an elongated, approximately rectangular cross-section;
- the adjustment, in sections, of the gap width of the nozzle gap by means of adjustable segments which directly bound said nozzle gap;
- the adjustment taking place dynamically during the extrusion and a wall-thickness profile being assigned to the preform over its length and breadth in the process; and
- the further processing of the extrudate passing out of the nozzle gap to form the plastic article takes place inside a multi-part moulding tool in the first heat using gas pressure and/or vacuum.

10. Method according to claim 9, **characterised in that** the length of the nozzle gap is varied dynamically during the extrusion.

11. Method according to either of claims 9 or 10, **characterised in that** the plasticized material from the extruder is brought, in the extrusion head, initially into the form of a melt flow which is guided in tubular form and which is diverted, inside the extrusion head, into at least one, and preferably into two, melt flows which are guided in web form.

## Revendications

1. Dispositif de fabrication de produits en matière synthétique par extrusion-soufflage, comprenant une tête d'extrusion pour extruder des préformes (1) en forme de bande ou de ruban en matière thermoplastique, ainsi qu'un outil de formage (3) pour le traitement ultérieur des préformes en forme de bande ou de ruban au cours du premier passage au four sous application d'une pression de gaz et/ou d'un vide afin de former le produit en matière synthétique, dans lequel la sortie de fonte de la tête d'extrusion est réalisée sous la forme d'une fente de buse s'étendant en ligne droite et réglable transversalement à la direction d'extrusion, **caractérisé en ce que** la fente de buse (6) est limitée au moins sur un côté par un nombre de segments (9) réglables indépendamment les uns des autres transversalement à la direction d'extrusion et permettant un réglage gradué ou échelonné de l'ouverture et/ou de la largeur de la fente de buse (6).

2. Dispositif selon la revendication 1, **caractérisé en ce que** les segments sont réalisés respectivement sous forme de robinets-vannes (9) réglables par des dispositifs de réglage individuels (10) transversalement à la direction d'écoulement de fonte.

3. Dispositif selon l'une quelconque des revendications 1 ou 2, **caractérisé en ce que** les segments (9) sont réglables dynamiquement pendant l'extrusion.

4. Dispositif selon l'une quelconque des revendications 1 à 3, **caractérisé en ce qu'**il n'est prévu aucun réglage de base de l'ouverture de fente de la fente de buse (6) au moyen d'un composant qui agit sur toute la largeur de la fente de buse (6).

5. Dispositif selon l'une quelconque des revendications 1 à 4, **caractérisé en ce que** les segments sont de largeur différente de sorte qu'ils constituent une part différente de la limitation de la fente de buse (6).

6. Dispositif selon la revendication 5, **caractérisé en ce que** les segments extérieurs sont plus étroits que les segments intermédiaires.

7. Dispositif selon l'une quelconque des revendications 1 à 5, **caractérisé en ce que** les segments sont réglables respectivement entre une position neutre complètement ouverte dans laquelle la fente de buse (6) présente l'ouverture maximale dans la zone en question et une position fermant cette zone complètement.

8. Dispositif selon l'une quelconque des revendications 1 à 7, **caractérisé en ce que** la fente de buse (6) est limitée sur les deux côtés longitudinaux par des segments réglables transversalement à la direction d'extrusion.

9. Procédé d'extrusion-soufflage de produits en matière synthétique utilisant au moins une préforme en forme de ruban ou de bande en matière thermoplastique, comprenant les étapes de procédé suivantes :
- plastifier une matière thermoplastique dans une extrudeuse,
- amener la matière plastifiée jusqu'à une fente de buse d'une tête d'extrusion, la fente de buse présentant une section transversale allongée, approximativement rectangulaire,
- régler localement l'ouverture de fente de la fente de buse au moyen de segments réglables limitant directement la fente de buse,
- le réglage étant effectué de manière dynamique pendant l'extrusion et un profil d'épaisseur de paroi étant ainsi spécifié pour la préforme sur la longueur et/ou la largeur,
- le traitement ultérieur du produit d'extrusion sortant de la fente de buse pour former le produit en matière synthétique étant effectué à l'intérieur d'un outil de formage en plusieurs pièces au cours du premier passage au four en utilisant une pression de gaz et/ou un vide.

10. Procédé selon la revendication 9, **caractérisé en ce que** la longueur de la fente de buse est amenée à varier dynamiquement au cours de l'extrusion.

11. Procédé selon l'une quelconque des revendications 9 ou 10, **caractérisé en ce que** la matière plastifiée est amenée hors de l'extrudeuse dans la tête d'extrusion d'abord sous la forme d'un courant de fonte guidé de manière tubulaire qui est dévié à l'intérieur de la tête d'extrusion dans au moins un, de préférence dans deux courants de fonte guidés sous forme de bande.
